# EUROPÄISCHE PATENTSCHRIFT

(11) **EP 1 074 090 B1**
(45) Veröffentlichungstag und Bekanntmachung des Hinweises auf die Patenterteilung: **29.08.2007**
(21) Anmeldenummer: 99927705.6
(22) Anmeldetag: 21.04.1999
(51) Int. Cl.: H03M 1/00

(54) **VERFAHREN ZUR KONVERTIERUNG BAUMSTRUKTURIERTER DATEN**
METHOD FOR CONVERTING TREE-STRUCTURED DATA
PROCEDE POUR CONVERTIR DES DONNEES A STRUCTURE ARBORESCENTE

(30) Priorität: 21.04.1998 DE 19817617
(43) Veröffentlichungstag der Anmeldung: 07.02.2001
(73) Patentinhaber: T-Mobile Deutschland GmbH, 53227 Bonn (DE)
(72) Erfinder: KEHR, Klaus, D-53639 Königswinter (DE)
(74) Vertreter: Riebling, Peter
(86) Internationale Anmeldenummer: PCT/DE1999/001208
(87) Internationale Veröffentlichungsnummer: WO 1999/055004

(56) Entgegenhaltungen:
- EP-A- 0 803 806
- US-A- 5 600 826
- SCHMIDT Y ET AL: "ERFAHRUNGEN MIT VDN BEI DER UEBERSETZUNGSKONSTRUKTION. EXPERIENCES WITH VDM IN COMPILER CONSTRUCTION" INFORMATIONSTECHNIK IT, Bd. 29, Nr. 4, 1. Januar 1987 (1987-01-01), Seiten 211-216, XP002063424

## Beschreibung

Die Erfindung betrifft ein Verfahren zur Konvertierung baumstrukturierter, von einer ersten Datenverarbeitungsanlage bereitgestellter Daten in der Form eines Quellbaumes in von einer zweiten Datenverarbeitungsanlage lesbare Daten in der Form eines Zielbaumes, nach dem Oberbegriff des Patentanspruchs 1.

In vielen Bereichen der Datenverarbeitung ist es notwendig, von einem System erzeugte und verwaltete Daten einem anderen System zur Weiterverarbeitung bereitzustellen. Dies kann durch Austausch der Daten in einem bestimmten Datenformat erfolgen, z.B. in Form von ASCII-Dateien. Die ASCII-Dateien sind jedoch häufig Änderungen unterworfen. Diese betreffen weniger den "groben" syntaktischen Aufbau der Dateien, als vielmehr die Inhalte. Objektklassen oder einzelne Attribute kommen hinzu oder fehlen, Wertebereiche für Attribute ändern sich, Attribute finden sich in anderen Objektklassen wieder. Bisher wurden die Daten mit Hilfe einer relativ starren Softwarelösung in das benötigte Zielformat konvertiert. Alle Formatänderungen der Eingangsdaten mußten im Quellcode nachgezogen und anschließend eine neue Version erzeugt werden.

Ein Aufsatz von Schmidt Y. et al.: "Erfahrungen mit VDM bei der Übersetzungskonstruktion (Experiences with VDM in Compiler Construction)" in Informationstechnik IT, Bd. 29, Nr. 4, 1. Januar 1987, Seiten 211-216, XP002063424, befasst sich mit baumstrukturierten Daten in der sogenannten "Common Abstract Tree Language", die als intermediäre Sprache bei der Transformierung von einer Programmiersprache in eine andere dient. Genaue Angaben, wie die Transformierung erfolgt, gehen aus diesem Aufsatz nicht hervor.

Die US-A-5 600 826 offenbart ein Verfahren zur Konvertierung zwischen sequentiellen Daten und baumartigen Daten. Hierbei werden unter Identifizierung von Knoten und Objekten Baumstrukturen gebildet. Die sequentiellen Eingangsinformationen enthalten Positionsinformationen, Attribute und Datenidentifikatoren zur Bildung einer Baumstruktur. Diese Schrift lehrt jedoch keine Konvertierung von Baumstrukturen aus Objekten einer oder mehrerer Objekthierarchien.

Die EP-A-0 803 806 lehrt ein Datenkonvertierungsverfahren zwischen Datentypen unterschiedlicher Softwaretools. Die hierbei verwendeten Datenstrukturdefinitionsdateien liegen nicht in einer Baumstruktur vor, noch werden sie in eine Baumstruktur konvertiert.

Um auf Änderungen der Datenstruktur des Ausgangsbaumes künftig schnell und flexibel reagieren zu können, liegt der vorliegenden Erfindung die Aufgabe zugrunde, ein regelgesteuertes Verfahren zur Konvertierung baumstrukturierter Daten vorzuschlagen, bei dem Änderungen an Quell- oder Zielformaten weitestgehend durch einfache Regeländerungen aufgefangen werden können.

Diese Aufgabe wird durch die kennzeichnenden Merkmale des Patentanspruchs 1 gelöst.

Die Erfindung beruht auf dem Gedanken, die Konvertierungsregeln nicht fest in Programmcode zu "gießen", sondern ein Regelwerk zu entwickeln, von dem ein flexibler Konverter zur Laufzeit gesteuert wird.

Der durch die Erfindung erzielte Vorteil bei der Konvertierung von Daten liegt darin, daß nun schnell und flexibel auf eine Änderungen des Formats der Eingangsdaten reagiert werden kann, da kein festes Programm, sondern ein angepassbares Regelwerk verwendet wird.

Vorteilhaft werden die Eingangsdaten von einem Analysealgorithmus vorverarbeitet und in einem festen Format in einer Datei bereitgestellt.
Ebenso werden die konvertierten Daten in einem festen Format in einer Datei für eine Nachverarbeitung bereitgestellt.

Zur Ermittlung der Wurzel des Zielbaums und der Wurzel des Quellbaums wird jeweils diejenige Objektklasse ausgezeichnet, die in der Klassenhierarchie höher liegt, als alle übrigen Objektklassen. Jeder Zeilbaumknoten wird nur dann erzeugt, wenn sich ein Quellbaumknoten finden lässt, der bestimmten, in einer Erzeugungsregel festgelegten Bedingungen genügt. Der gefundene Quellbaumknoten ist dann die Erzeugende Instanz für den Zielbaumknoten.

Für die Konstruktion eines neuen Teilbaums unterhalb eines betrachteten Zielbaumknotens muß erfindungsgemäß nur der Teilbaum unterhalb der diesem Zielbaumknoten zugeordneten Erzeugenden Instanz und der Pfad von der Wurzel zu dieser Instanz betrachtet werden. Dabei ist für jede Objektklasse des Zielbaums genau eine Erzeugungsregel definiert.

Anhand der Erzeugungsregel wird der Quellbaum im Umfeld der Erzeugenden Instanz nach Instanzen einer bestimmten Objektklasse, die spezielle Bedingungen erfüllen sollen durchsucht, und bei erfolgreicher Suche wird ein neuer Knoten im Zielbaum angelegt, und die Quellbauminstanz wird zur zugehörigen Erzeugenden Instanz des Zielbaumknotens.

Vorzugsweise bestehen die Regeln zur Berechnung der zu den neu erzeugten Knoten (Objekten) gehörenden Attribute aus Funktionen, anhand welcher aus den Attributen verschiedener Objekte des Quellbaums Attribute des neuen Zielbaumknotens berechnet werden.

Um eine geregelte Konvertierung zu ermöglichen, werden für Quell- und Zielbaum die zulässigen Objektklassen, die zulässigen Nachfolger der einzelnen Objektklassen und die zu jeder Objektklasse zugehörigen Attribute im Regelwerk bereitgestellt (Containment).

Nachfolgend wird die Erfindung anhand eines Ausführungsbeispiels unter Zuhilfenahme von Zeichnungen näher beschreiben. Es zeigt:
- Figur 1:: Einbettung des Konverters in das Gesamtsystem;
- Figur 2:: Struktur des Konverters;
- Figur 3:: Erzeugende Instanz eines Zielbaumknotens K;
- Figur 4:: Anlegen der Nachfolger eines Zielbaumknotens;
- Figur 5:: Beschränkung auf Teilbäume;
- Figur 6:: Neue Objektklasse als Wurzel einfügen
- Figur 7:: Darstellung des Containments durch Regeln;
- Figur 8:: Einstiegspunkte für die Instanzensuche;
- Figur 9:: Festlegung der Suchbereiche;
- Figur 10:: nur einen oder mehrere Nachfolger instanziieren;
- Figur 11:: Instanzerzeugungsregeln im Regelwerk;;
- Figur 12:: Attributberechnungsregeln im Regelwerk;
- Figur 13:: Wurzel des Zielbaums anlegen;
- Figur 14:: Attribute einer neuen Instanz berechnen;
- Figur 15:: Nachfolger einer neuen Instanz anlegen;
- Figur 16:: Neue Instanz als "alt" markieren.

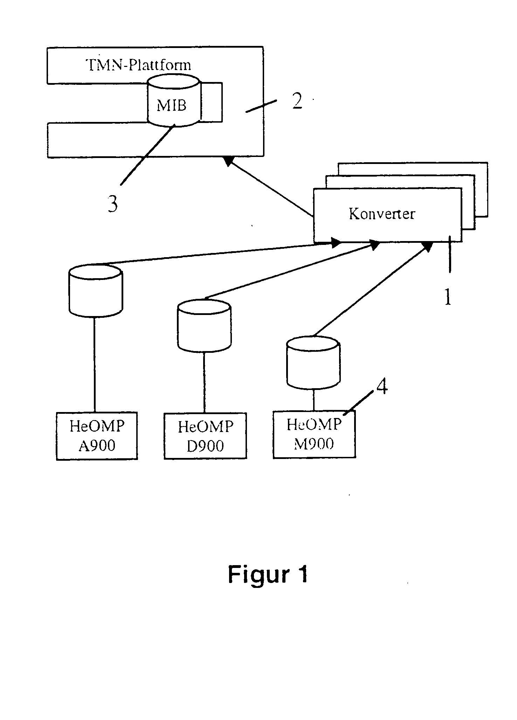

In diesem konkreten Beispiel wird von einer Datenkonvertierung ausgegangen, wie sie in modernen digitalen Mobilfunknetzen erfolgt, um z.B. Daten die im Operation und Management Center (OMC) bereitstehen der Telekommunikation Management Network (TMN) - Plattform verfügbar zu machen.
Im Zuge der Einführung einer TMN-Plattform 2 bei den Mobilfunknetzbetreibern besteht die Aufgabe, -Basisstations-Konfigurationsdaten für die plattforminterne MIB (Management Information Base) 3 bereitzustellen. Auf Grund mangelnder Alternativen wird hierzu auf ASCII-Dateien zugegriffen, die sich bei allen Basisstations-Systemtechniken mit herstellerspezifischen Werkzeugen aus den OMC-Rechnern 4 gewinnen lassen. Figur 1 zeigt die Einbettung des Konverters 1 in ein solches System.

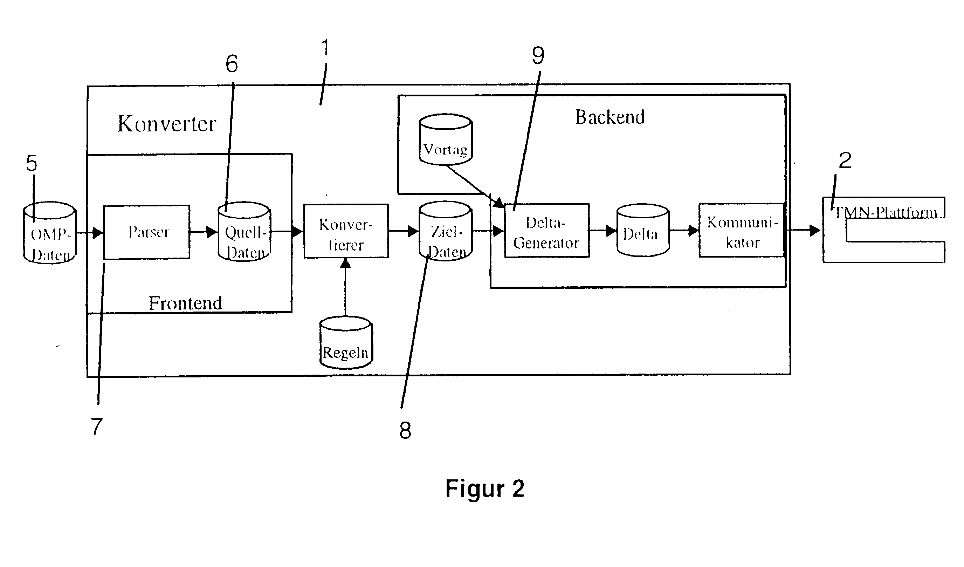

Figur 2 zeigt den Aufbau des Konverters 1. Damit der Konverter seine Arbeit verrichten kann, werden die Eingangsdaten 5 (OMP-Daten) vorverarbeitet und in einem festgelegten Format in einer Datei 6 bereitgestellt (Frontend). Diese Aufgabe übernimmt in diesem Fall ein mit bekannten Werkzeugen konstruierter Analysealgorithmus (Parser 7). Dieses Frontend kann für andere Anforderungen leicht durch ein anderes Modul ersetzt werden. Der Konverter 1 erzeugt wiederum eine Datei 8 in einem festgelegten Format. welche dann für die Nachverarbeitung (Backend) zur Verfügung steht. Hier werden zudem die Unterschiede zu den am Vortag generierten Daten ermittelt (Delta-Generierung 9) und die Abweichungen als CMIS-Nachrichten (Common Management Information Services-Format) an die TMN-Plattform 2 gesendet, wo sie in den MIB-Datenbestand eingearbeitet werden. Auch das Backend kann für andere Zwecke ausgetauscht werden.

### Funktionsprinzip

Die Funktionsweise des Konverters 1 leitet sich aus den folgenden wesentlichen Beobachtungen ab:

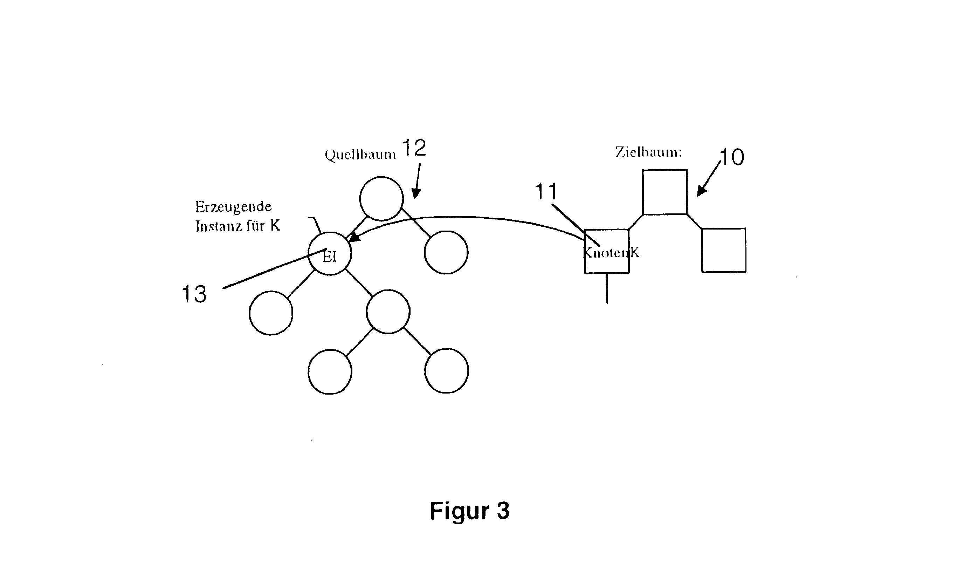

Gemäß Figur 3 beruht die Entscheidung, ob im Zielbaum 10 Instanzen (Knoten) 11 angelegt werden müssen, auf der Auswertung eines relativ begrenzten Bereiches des Quellbaums 12. Dabei läßt sich immer eine Instanz 13 des Quellbaums 12 festlegen, im weiteren als die "Erzeugende Instanz", EI bezeichnet, deren Existenz als Grundvoraussetzung zum Anlegen einer neuen Instanz 11, Knoten K, betrachtet wird.

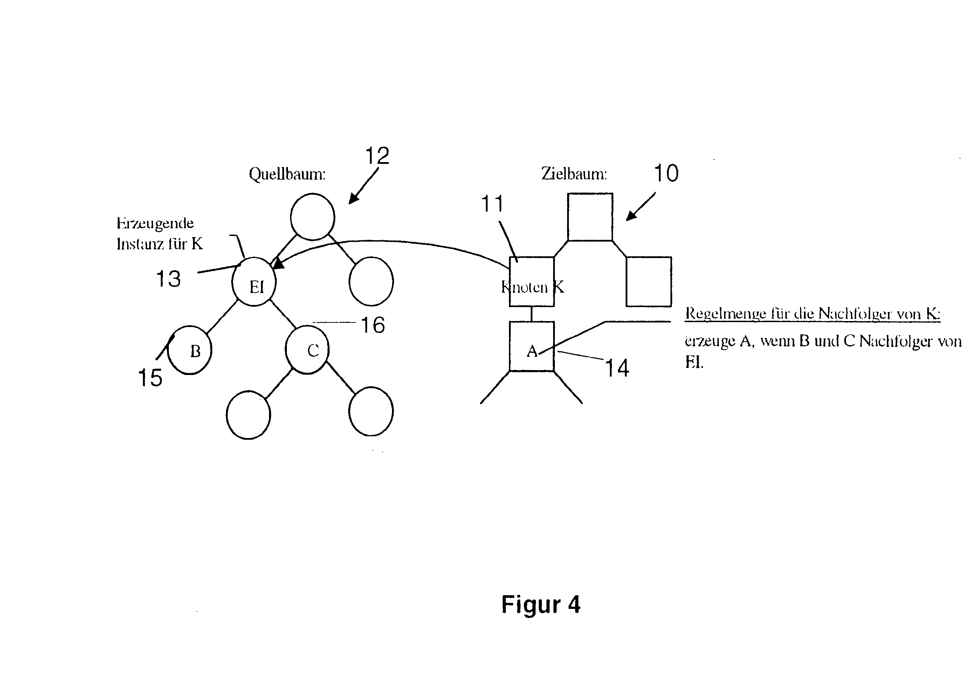

Wie in Figur 4 dargestellt ist, lassen sich allgemeingültige Regeln festlegen, die im Umfeld der Erzeugenden Instanz El 13 eines Knotens und unabhängig von der konkreten Lage im Quellbaum 12 ausgewertet werden können, um den/die Nachfolger A 14 des Knotens K 11 anzulegen. Im Beispiel bedeutet das: Erzeuge Knoten A 14 , wenn im Quellbaum 12 Knoten B 15 und C 16 Nachfolger von EI 13.

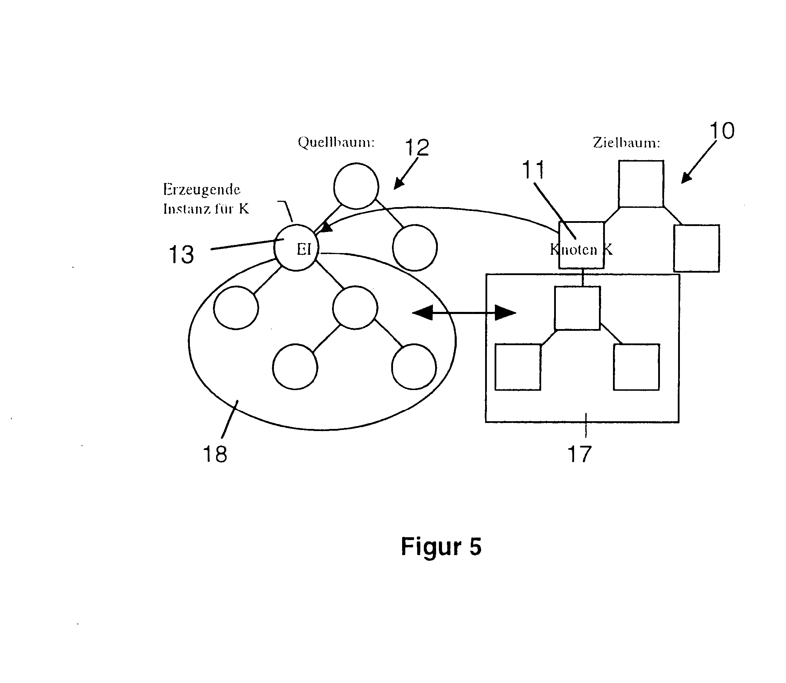

Für das Konstruieren eines neuen Teilbaums 17 unterhalb eines Knotens 11 im Zielbaum 10 genügt die Betrachtung des Teilbaums 18 der Erzeugenden Instanz 13 dieses Knotens 11 im Quellbaum 12. Dies ist in Figur 5 verdeutlicht. An dieser Stelle sei erwähnt, daß für evtl. auftretende Sonderfälle Funktionen bereitgestellt werden müssen, die diese Prinzipien durchbrechen können und ein Navigieren und Auswerten von Bedingungen im gesamten Quellbaum 12 ermöglichen.

### Regelmenge

Wie bereits erwähnt, soll der Konverter 1 die Intelligenz zur Erzeugung eines Zielbaums 10 aus einem gegebenen Quellbaum 12 nicht "hart kodiert" enthalten, sondern sich zur Laufzeit die für die jeweilige Situation passenden Umsetzungsvorschriften ermitteln und anwenden.
Dieses Regelwerk wird im vorliegenden Beispiel in einer ASCII-Datei abgelegt und interpretiert. Andere Varianten, wie z.B. das Ablegen der Regeln in einer Datenbank sind hier denkbar.

Für den Aufbau eines Zielbaums 10 aus einem gegebenen Quellbaum 12 benötigt der Konverter Regeln, aus denen er die folgenden Informationen gewinnen kann:
1. Welche Nachfolger kann eine Instanz des Zielbaums haben
2. Welche Bedingungen müssen erfüllt sein, damit im Zielbaum eine neue Instanz als Nachfolger einer bestehenden angelegt wird
3. Wie berechne ich die Attribute einer neuen Instanz des Zielbaums

Zusätzlich erscheint es sinnvoll, Instanzerzeugungsregeln und Attributberechnungsregeln sowie den Quellbaum und die Ergebnisse der Attributberechnungen auf ihre Korrektheit zu überprüfen. Dazu sind die folgenden Informationen erforderlich, die ebenfalls leicht im Regelwerk abgelegt werden können:
1. Welche Nachfolger kann eine Instanz des Quellbaums haben
2. Welche Attribute enthält jede Instanz des Quell- und des Zielbaums
3. Welche Wertebereiche gelten für die Werte der Attribute

Im folgenden wird der Aufbau des Regelwerkes näher beschrieben und erläutert, welche Informationen aus den jeweiligen Regelarten gewonnen werden. Diese Informationen werden dann von dem beschrieben Verfahrensalgorithmus zur Konvertierung benutzt.

Grundlegend wichtig für die Ausführung des Verfahrens und dafür, daß die Regeln des Regelwerks überhaupt angewendet werden können, ist die Gestaltung der Datenstrukturen, mit denen die Eingangsdaten in Form des Quellbaums und die Outputdaten in Form des Zielbaums repräsentiert werden. Daher wird im folgenden zunächst auf die Anforderungen an die Datenstrukturen eingegangen.

### Anforderungen an die Datenstrukturen

Wie bereits erwähnt, sollen die Quell- und die Zieldaten in Form von sogenannten "Bäumen" vorliegen. Hierzu können die in der EDV-Technik allgemein bekannten Datenstrukturen verwendet werden.
Damit auf diesen Datenstrukturen die Regeln des Regelwerks angewendet und der Grundalgorithmus zum Aufbau des Zielbaums ausgeführt werden können, sind die Datenstrukturen so zu konzipieren, daß gewisse Informationen jederzeit (und möglichst effizient) ermittelt werden können.

Diese Informationen sind:
- der Vorgänger eines jeden Baumknotens (falls vorhanden)
- die Nachfolger eines jeden Knotens (falls vorhanden)
- die Objektklasse, der ein jeder Knoten angehört
- die konkrete Instanz, die ein jeder Knoten repräsentiert
- die konkreten Werte aller Attribute eines jeden Knotens
- den Pfad von der Wurzel zu einem jeden Knoten
- den Teilbaum unterhalb eines jeden Knotens
- die Zugehörigkeit des betrachteten Knotens zum Quell- oder zum Zielbaum
- die "Erzeugende Instanz" für jeden Zielbaumknoten

Auf konkreten Quell- und Zielbäumen kann man nun mit Hilfe entsprechender Suchalgorithmen Wertemengen ermitteln, auf denen bereits eine Reihe von Grundfunktionen des Konverters berechnet werden:

Die Wertemengen sind:
- K_{Q}: die Menge aller Knoten des Quellbaums (Eingabe)
- K_{Z}: die Menge aller Knoten des Zielbaums (zu erzeugende Ausgabe
- K = K_{Q} ∪ K_{Z}: die Menge aller Baumknoten

Für eine Menge M soll Pot(M) die zugehörige Potenzmenge bezeichnen.

Die folgenden Grundfunktionen können darauf berechnet werden:

Jeder Knoten des Baumes gehört einer bestimmten Objektklasse an. Diese ermittelt die Funktion Obj
Obj: K → KL

Für jeden Knoten des Baumes ermittelt Sub den darunterliegenden Teilbaum
Sub: K → Pot(K)

Für jeden Knoten des Baumes ermittelt Path den Pfad von der Wurzel zu diesem Knoten
Path: K → Pot(K)

Für jeden Knoten des Zielbaums ermittelt Ei die erzeugende Instanz im Quellbaum
Ei: K_{Z} → K_{Q}

Die obigen Grundfunktionen werden durch einfaches Durchsuchen der Bäume realisiert. Dazu müssen die formulierten Anforderungen an die Datenstrukturen erfüllt sein.

### Einführung der Klasse "root" (Wurzel)

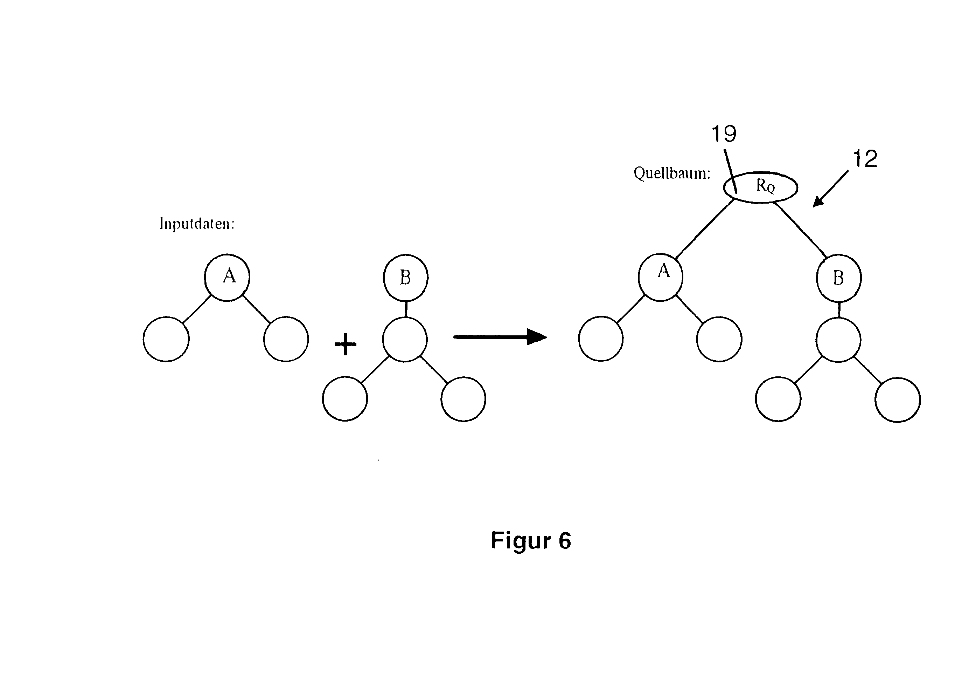

Um einen definierten Anfang für die Auswertung der Regeln während der Konvertierung und den Konvertierungsalgorithmus selbst festzulegen, ist es notwendig, Objektklassen als "Wurzel" von Quell- und Zielbaum auszuzeichnen. Alle übrigen Objektklassen müssen über einen Pfad von der Wurzel aus erreichbar sein, und der Algorithmus beginnt mit der Auswertung der Regeln für die Wurzelklasse des Zielbaums.
Wie es in Figur 6 dargestellt ist, wird die geforderte Struktur hier durch die Einführung völlig neuer Objektklassen, nämlich R_{Z} (R steht für Root) als Wurzel des Zielbaums und R_{Q} als Wurzel 19 des Quellbaums realisiert. Die in der Klassenhierarchie höchsten Objektklassen, z.B. A und B, des Quell- bzw. Zielbaums werden dann im Regelwerk als Nachfolger von R_{Q} bzw. R_{Z} festgelegt.

Diese Vorgehensweise hat den zudem den Nebeneffekt, daß mehrere, zunächst unabhängige Quellbäume gleichzeitig konvertiert werden können, indem sie durch Anhängen an R_{Q} 19 zu nur einem Quellbaum 12 vereinigt werden.

### Strukturbeschreibung Quell- und Zielbaum

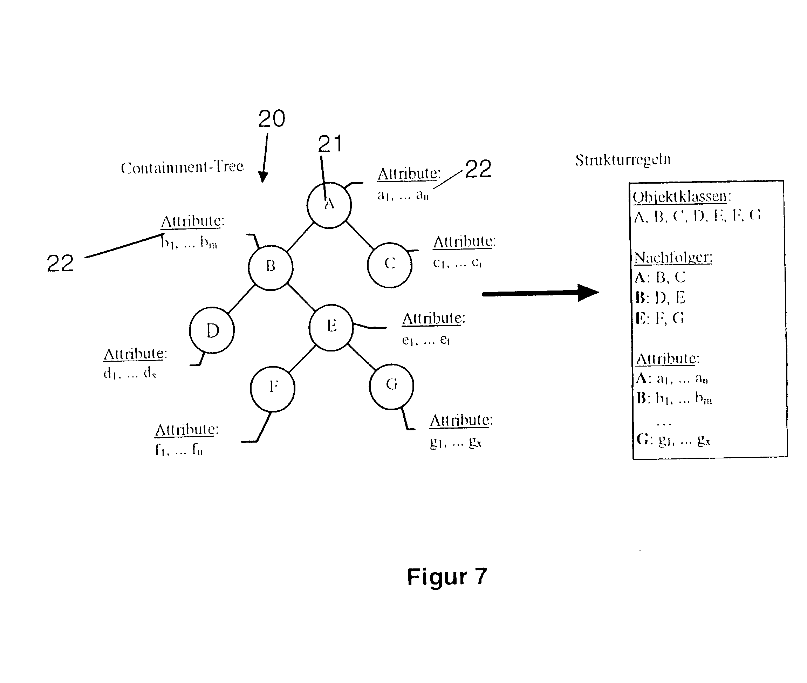

Mit Hilfe der Regeln dieser Kategorie ist der Containment-Tree 20 (Figur 7) für die Quell- und die Zieldaten zu beschreiben. Es muß ablesbar sein:
1. welche Objektklassen können/müssen vorkommen?
   Diese Anforderung kann über eine Liste realisiert werden, welche die zulässigen Objektklassen 21, z.B. A, B,.., G, enthält. Dabei können Objektklassen, die unbedingt vorkommen müssen (wie z.B. die neue Klasse "root" oder die ursprüngliche Wurzel des Baumes) als "zwingend notwendig" gekennzeichnet werden.
2. welche Nachfolger, z.B. B, C, kann/muß jede Objektklasse haben?
   Zu jeder Objektklasse 21 gibt es eine Liste, in der ihre zulässigen Nachfolger ablesbar sind. Auch hier können Objektklassen, deren Fehlen einen gravierenden Fehler bedeuten würde, als "zwingend notwendig" markiert werden.
3. welche Attribute 22 kann/muß jede Objektklasse enthalten?
   Zu jeder Objektklasse 21 gibt es eine weitere Liste, in der die zugehörigen Attribute 22 verzeichnet sind. Auch hier ist die Möglichkeit vorgesehen, wichtige Attribute als "zwingend notwendig" zu kennzeichnen.

Aus diesen Regeln (Figur 7) kann man mit Hilfe entsprechender Suchalgorithmen Wertemengen ableiten, auf denen bereits eine Reihe von Grundfunktionen des Konverters 1 berechnet werden:

Die Wertemengen sind:
- KL_{Q}: die Menge aller Objektklassen 21 des Quellbaums 12
- KL_{Z}: die Menge aller Objektklassen 21 des Zielbaums 10
- KL = KL_{Q} ∪ KL_{Z}: die Menge aller Objektklassen 21 des Regelwerks
- AT_{Q}: die Menge aller Attribute 22 von Objekten 20 des Quellbaums 12
- AT_{Z}: die Menge aller Attribute 22 von Objekten 21 des Zielbaums 10
- AT = AT_{Q} ∪ AT_{Z}: die Menge aller Attribute 22 von Objekten 21 des Regelwerks

Zusätzlich kann hier durch die Angabe von Wertebereichen für Attribute 22 auch die folgende Menge festgelegt werden:
- VAL: VAL die Menge aller möglichen Attributwerte

Die folgenden Grundfunktionen können darauf berechnet werden:

Für jede Objektklasse 21 ermittelt die Funktion Nf die Menge aller möglichen Nachfolgeklassen
Nf: KL → Pot(KL_{Q}) ∪ Pot(KL_{Z}).

Für eine Menge von Objektklassen 21 ermittelt Att die Menge aller darin enthaltenen Attribute 22
Att: Pot(KL) → Pot(AT)

Die obigen Grundfunktionen können durch einfaches Durchsuchen der Regelmengen realisiert werden.

### Erzeugungsregeln für Zielbauminstanzen

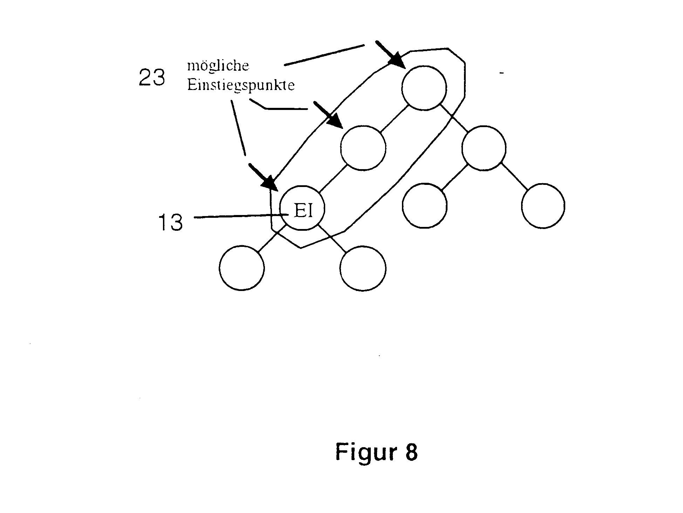

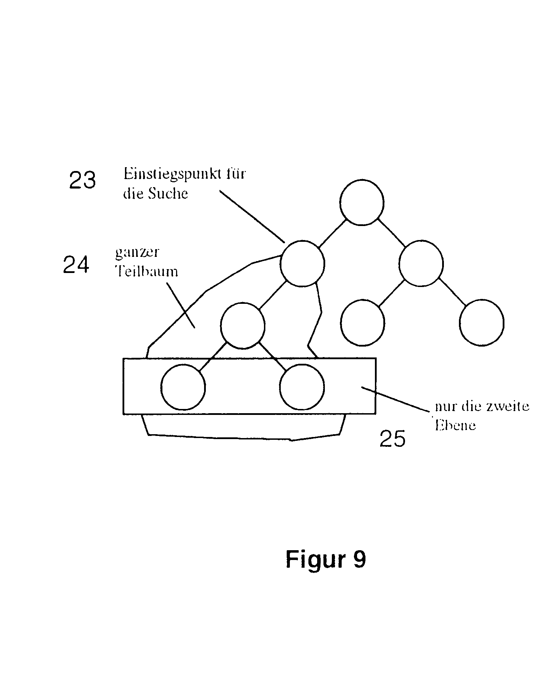

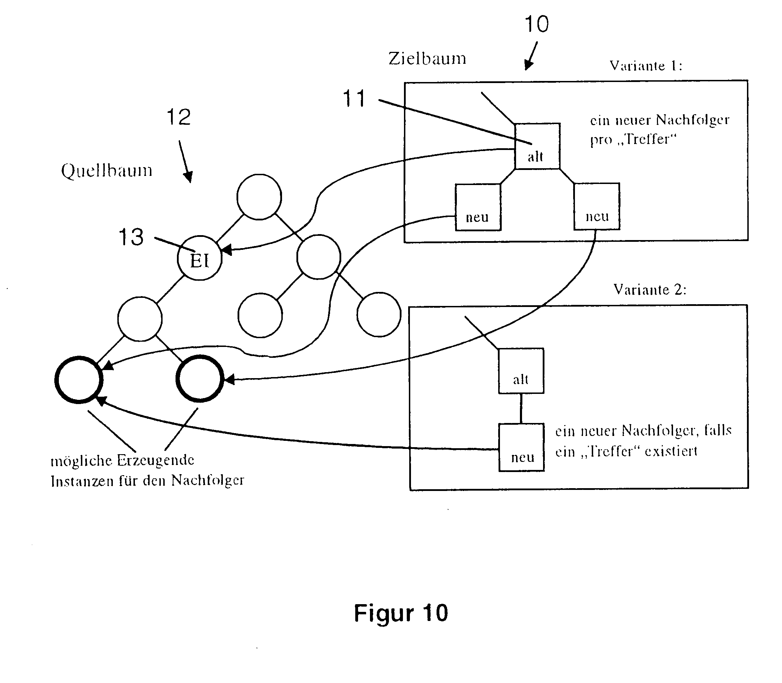

Die entscheidende Aufgabe beim Aufbau des Zielbaums 10 besteht darin zu erkennen, wann eine Instanz 11 einer Zielbaumobjektklasse anzulegen ist. Zur Lösung dieses Problems dienen die sogenannten Erzeugungsregeln, wovon genau eine für jede Objektklasse 21 des Zielbaums 10 angegeben werden muß. Für jede potentielle Nachfolgerklasse eines Zielbaumknotens 11 wird die zugehörige Erzeugungsregel dann im "Umfeld" der Erzeugenden Instanz 13 des Knotens im Quellbaum 12 ausgewertet und so ggf. neue Zielbaumknoten 11 als Nachfolger des ursprünglichen instanziiert.
Die Erzeugungsregel selbst "durchsucht" den Quellbaum 12 im Umfeld der Erzeugenden Instanz 13 nach Instanzen einer bestimmten Objektklasse 21, die spezielle Bedingungen erfüllen sollen. Ist die Suche erfolgreich, wird ein neuer Knoten 11 im Zielbaum 10 angelegt und die Quellbauminstanz zur zugehörigen Erzeugenden Instanz 13 des Zielbaumknotens 11.
Verschiedene Angaben in der Erzeugungsregel sind notwendig:
1. Einstiegspunkt 23 für die Suche (Figur 8)
   Als Einstiegspunkt muß einer der folgenden Quellbaumknoten festgelegt werden:
   - Wurzel des Quellbaums
   - Erzeugende Instanz 13
   - ein anderer Knoten auf dem Pfad von der Wurzel zur Erzeugenden Instanz
2. Art der Suche (Suchbereiche, Figur 9)
   Einer der folgenden Suchbereiche muß festgelegt werden:
   - ganzer Teilbaum 24 wird durchsucht
   - eine bestimmte Ebene 25 unterhalb des Einstiegspunkts wird durchsucht
3. Zusatzbedingungen
   - hier können weitere Bedingungen angegeben sein, die der Quellbaumknoten erfüllen soll, wie z.B. bestimmte Attributwerte aufweisen oder die Existenz zusätzlicher Zielbauminstanzen
4. Anwendungshäufigkeit (Figur 10)
   Für die Anwendungshäufigkeit muß eine der folgenden Alternativen ausgewählt werden:
   - erzeuge einen Zielbaumknoten für jeden Treffer
   - erzeuge nur einen Zielbaumknoten beim ersten Treffer

Ein Zielbaumknoten 11 wird nur angelegt, wenn sich mit Hilfe der zugehörigen Erzeugungsregel eine Erzeugende Instanz 13 für ihn im Quellbaum finden läßt.

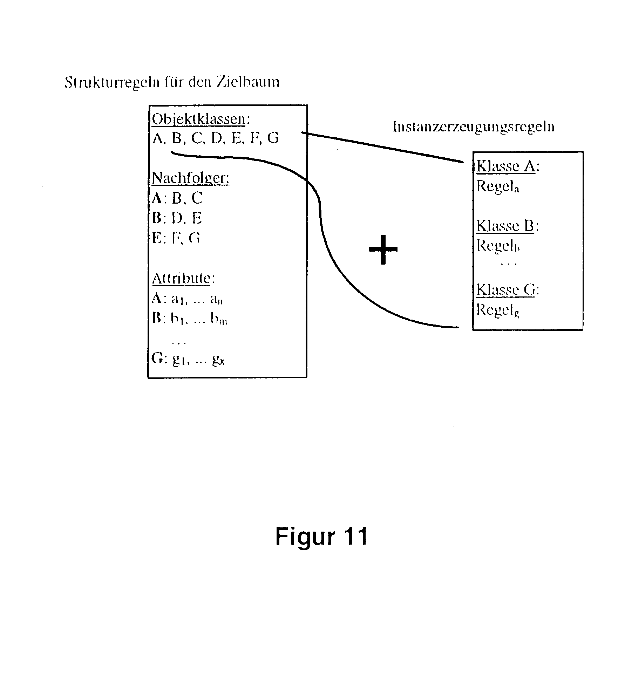

Figur 11 soll nochmals die für die Einbringung der Instanzerzeugungsregeln erforderlichen Eintragungen im Regelwerk veranschaulichen.

Mit der Einführung dieser Regeln erhalten wir eine neue Wertemenge und eine Grundfunktion:

Die Wertemenge ist:
- ER: die Menge aller Erzeugungsregeln im Regelwerk

Die folgende Grundfunktion kann daraufhin berechnet werden:

Für jede Klasse des Zielbaums ermittelt die Funktion Gen die dazugehörige Erzeugungsregel
Gen: KL_{Z} → ER

Auch diese Grundfunktion ist durch "einfaches Durchsuchen" der Regelmengen realisierbar. Eine genauere Beschreibung erfolgt deshalb hier nicht.

Die Erzeugungsregeln können somit als Funktionen verstanden werden, die für eine bestimmte Zielbaumobjektklasse eine Menge von Knoten des Quellbaums untersucht und ggf. eine davon als Erzeugende Instanz für eine neue Instanz der betrachteten Zielbaumobjektklasse (d. h. einen neuen Zielbaumknoten) zurückliefert. Wird keine Erzeugende Instanz gefunden, wird auch kein Zielbaumknoten angelegt.
er ∈ ER
er: KL_{Z} × Pot(K_{Q}) → K_{Q}

### Berechnungsregeln für Attribute

Nachdem ein Zielbaumobjekt erzeugt wurde, müssen abschließend noch die darin enthaltenen Attribute berechnet werden. Dazu wird für jedes Attribut eine Formel angeben. Diese Formel enthält als Operatoren die gängigen Rechenoperationen und als Operanden Konstanten, Variablen und Attributwerte des Quellbaums. Dabei kann auf die Attribute der Erzeugenden Instanz (die zu diesem Zeitpunkt bereits festliegt) einfach per Namen zugegriffen werden. Die Attribute dieses einen Objekts reichen aber zur Berechnung des neuen Werts nicht immer aus. Es ist daher eine Möglichkeit zu schaffen, auf die Attribute beliebiger weiterer Objekte zuzugreifen.
Hierzu wird zu jeder Zielbaumobjektklasse angegeben, welche weiteren Instanzen des Quellbaums ihre Attribute zur Berechnung der eigenen Attributwerte "bereitstellen" sollen. Diese Quellbauminstanzen werden im weiteren "Berechnungsinstanzen" genannt. Berechnungsinstanzen werden in ähnlicher Weise gefunden, wie die Erzeugenden Instanzen.

Die Suchregel für eine Berechnungsinstanz enthält die folgenden Angaben:
1. Einstiegspunkt für die Suche
   Als Einstiegspunkt muß einer der folgenden Quellbaumknoten festgelegt werden:
   - Wurzel des Quellbaums
   - Erzeugende Instanz
   - ein anderer Knoten auf dem Pfad von der Wurzel zur Erzeugenden Instanz
2. Art der Suche
   Einer der folgenden Suchbereiche muß festgelegt werden:
   - ganzer Teilbaum
   - eine bestimmte Ebene unterhalb des Einstiegspunkts
3. Zusatzbedingungen
   - hier können weitere Bedingungen angegeben sein, die der Quellbaumknoten erfüllen soll, wie z.B. bestimmte Attributwerte aufweisen oder die Existenz zusätzlicher Zielbauminstanzen

(Der 4. Parameter aus der Suche nach der Erzeugenden Instanz, die Anwendungshäufigkeit entfällt hier. Es wird immer die erste Übereinstimmung gewählt.)

Beim Erstellen der Suchregeln zur Suche nach den Berechnungsinstanzen für eine Zielbaumklasse, erhält jede Suchregel einen innerhalb der Zielbaumklasse eindeutigen Namen. Sollten verschiedene Berechnungsinstanzen Attribute gleichen Namens enthalten, kann dann über das Konstrukt <Berechnungsinstanzname>.<Attributname> eindeutig ein Attribut ausgewählt werden.

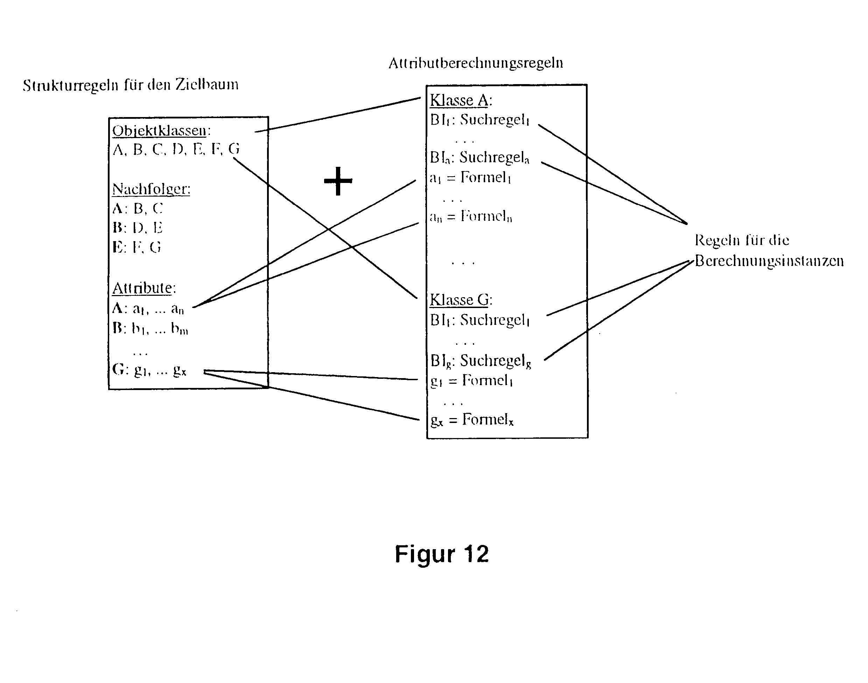

Figur 12 soll nochmals die für die für die Einbringung der Attributberechnungsregeln erforderlichen Eintragungen im Regelwerk veranschaulichen.
Mit der Einführung dieser Regeln erhalten wir eine neue Wertemenge und eine weitere Grundfunktion:

Die Wertemenge ist:
- AR: die Menge aller Regeln zur Attributberechnung im Regelwerk

Die folgende Grundfunktion kann daraufhin berechnet werden:

Für jedes Attribut innerhalb einer Objektklasse ermittelt Calc die dazugehörige Berechnungsvorschrift
Calc: AT_{Z} ×KL_{Z} → AR

Wie alle bisherigen Grundfunktionen ist auch diese durch "einfaches Durchsuchen" der Regelmengen realisierbar. Eine genauere Beschreibung erfolgt deshalb hier nicht.

Die Attributberechnungsregein können somit als Funktionen verstanden werden, die aus den Attributen verschiedener Objekte des Quellbaums einen neuen Wert berechnen.
ar ∈ AR
ar: Pot(K_{Z} × AT_{Z}) → VAL

### Grundalgorithmus

Es werden zunächst nochmals die Grundfunktionen aufgeführt, die dann bei der Beschreibung der grundlegenden Vorgehensweise zum Aufbau des Zielbaums benutzt werden. Die Funktionsweise dieser Grundfunktionen erfolgt hier nicht mehr, da deren Arbeitsweise bereits vorher erläutert wurde.

### Funktionen für das Regelwerk

Aus einem gegebenen, korrekt aufgebauten Regelwerk (wird durch eine Check-Routine überprüft) können die folgenden Ergebnisse durch einfache Funktionen ermittelt werden:

Sei
- M: eine Menge,
- Pot(M): die dazugehörige Potenzmenge,
- ER: die Menge aller Erzeugungsregeln im Regelwerk
- AR: die Menge aller Regeln zur Attributberechnung im Regelwerk
- KL_{Q}: die Menge aller Objektklassen des Quellbaums
- KL_{Z}: die Menge aller Objektklassen des Zielbaums
- KL = KL_{Q} ∪ KL_{Z}: die Menge aller Objektklassen des Regelwerks
- AT_{Q}: die Menge aller Attribute von Objekten des Quellbaums
- AT_{Z}: die Menge aller Attribute von Objekten des Zielbaums
- AT = AT_{Q} ∪ AT_{Z}: die Menge aller Attribute von Objekten des Regelwerks
- VAL: die Menge aller möglichen Attributwerte

Für jede Objektklasse ermittelt die Funktion Nf die Menge aller möglichen Nachfolgeklassen
Nf: KL → Pot(KL_{Q}) ∪ Pot(KL_{z})

Für jede Klasse des Zielbaums ermittelt die Funktion Gen die dazugehörige Erzeugungsregel
Gen: KL_{Z} → ER

Für eine Menge von Objektklassen ermittelt Att die Menge aller darin enthaltenen Attribute
Att: Pot(KL) → Pot(AT)

Für jedes Attribut innerhalb einer Objektklasse ermittelt Calc die dazugehörige Berechnungsvorschrift
Calc: AT_{Z} × KL_{Z} → AR

### Funktionen für Quell- und Zielbaum

In einem korrekt aufgebauten Baum (Quell- oder Zielbaum) können die folgenden Ergebnisse leicht ermittelt werden:

Sei
- K_{Q}: die Menge aller Knoten des Quellbaums (Eingabe
- K_{Z}: die Menge aller Knoten des Zielbaums (zu erzeugende Ausgabe
- K = K_{Q} ∪ K_{Z}: die Menge aller Baumknoten

Jeder Knoten des Baumes gehört einer bestimmten Objektklasse an. Diese ermittelt die Funktion Obj
Obj: K → KL

Für jeden Knoten des Baumes ermittelt Sub den darunterliegenden Teilbaum
Sub: K → Pot(K)

Für jeden Knoten des Baumes ermittelt Path den Pfad von der Wurzel zu diesem Knoten
Path: K → Pot(K)

Eine Erzeugungsregel sucht in einer Menge von Quellbaum-Knoten nach demjenigen, der alle Bedingungen erfüllt und damit die "Erzeugende Instanz" für eine neue Instanz einer Zielbaum-Objektklasse werden soll. (Wird kein passender Knoten gefunden, wird keine Instanz angelegt.)
er ∈ ER; er: KL_{Z} × Pot(K_{Q}) → K_{Q}

Für jeden Knoten des Zielbaums ermittelt Ei die erzeugende Instanz im Quellbaum
Ei: K_{z} → Ko

Eine Berechnungsvorschrift für Attribute ermittelt aus konkreten Attributwerten in Baumknoten einen neuen Wert
ar ∈ AR; ar: Pot(K × AT) → VAL

### Aufbau des Zielbaums

Mit Hilfe der oben angegebenen Funktionen kann nun ein Algorithmus angegeben werden, der den Zielbaum 10 mit "root" beginnend "ebenenweise" von oben nach unten aufbaut.

Sei
- R_{Z}: die Wurzel 26 des Zielbaums 10
- R_{Q}: die Wurzel 19 des Quellbaums 12

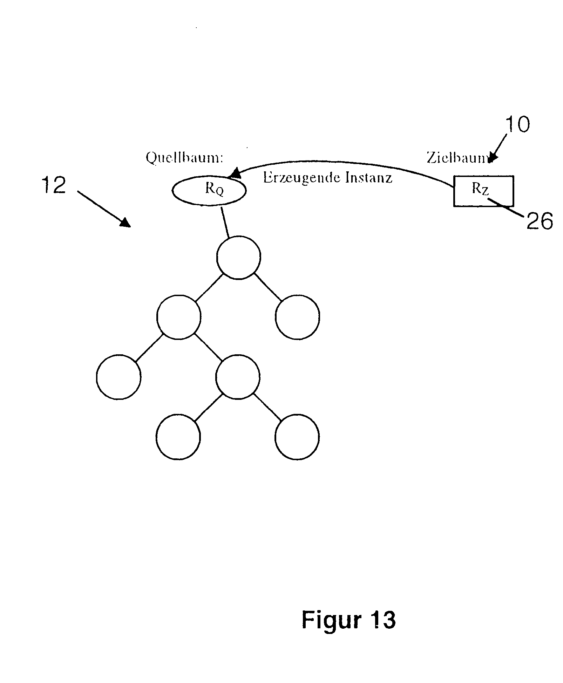

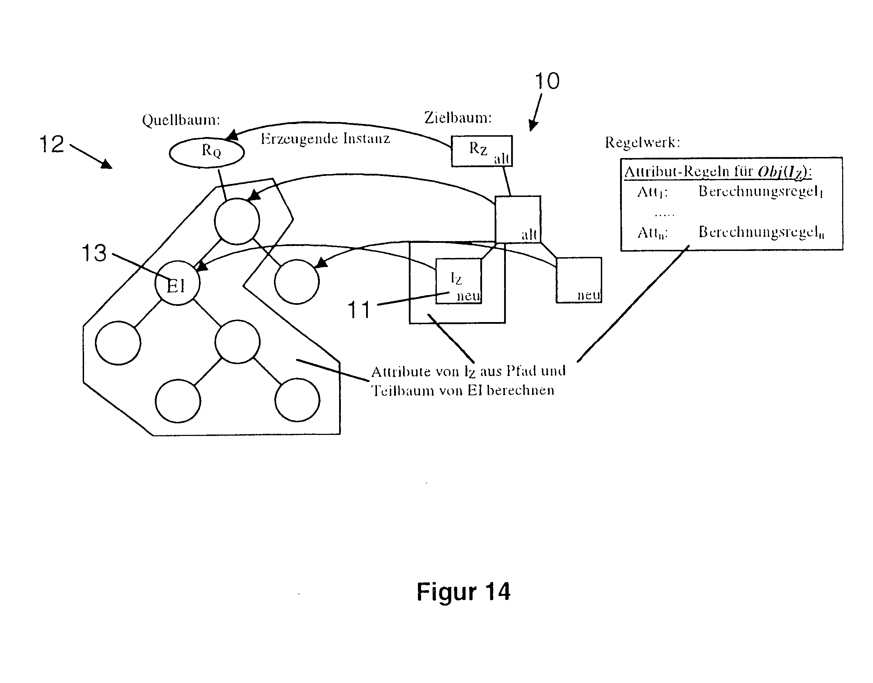

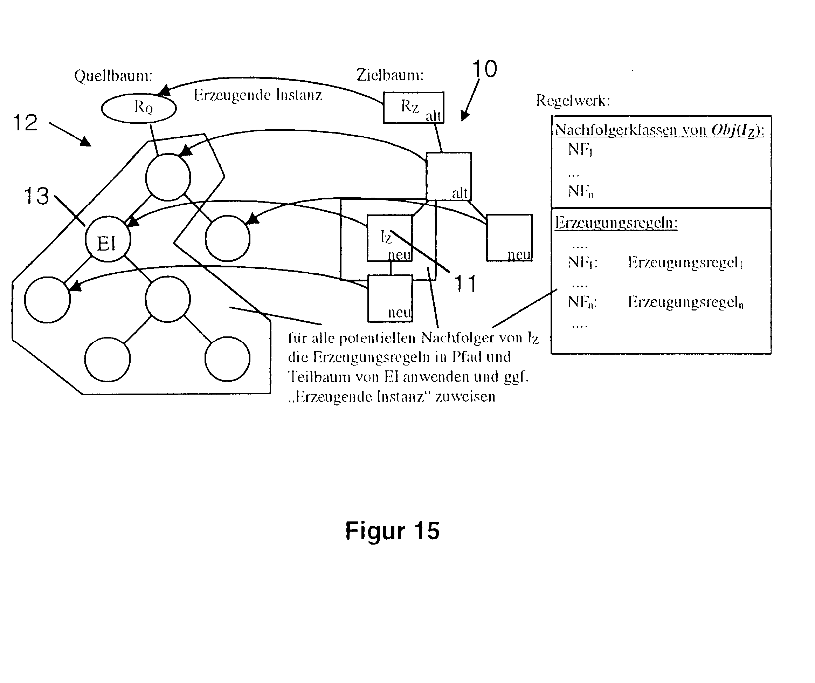

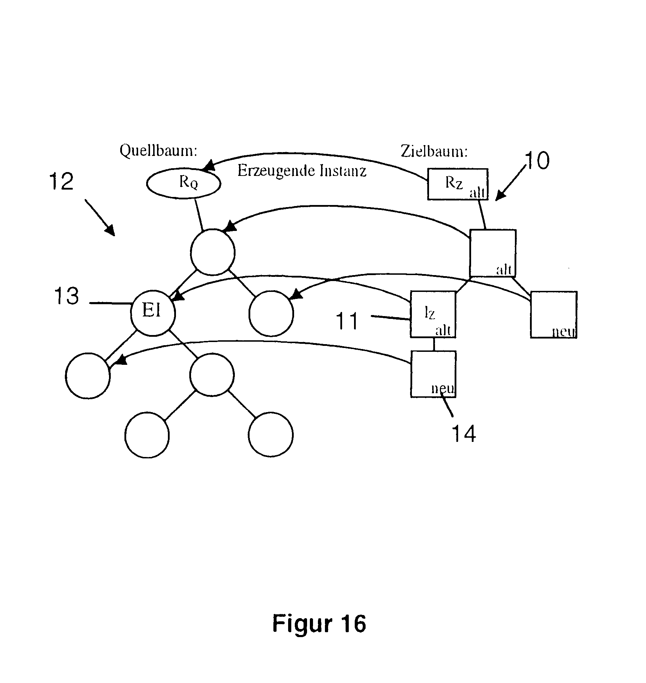

1. erzeuge die Wurzel R_{Z} 26 als erste "neue Instanz" des Zielbaums 10 und weise der Wurzel 26 als "Erzeugende Instanz" die Wurzel 19 des Quellbaums 12 zu, Ei(R_{Z}) := R_{Q} ; vgl. Figur 13
2. für jede "neue Instanz" I_{Z} 11 des Zielbaums 10
   I. berechne die Werte aller Attribute von I_{Z} 11, vgl. Figur 14 Attribute von I_{Z} 11 bestimmen mittels Att(l_{Z})
      für alle a ∈ Att(l_{Z}) mittels Calc(a,l_{Z}) die Berechnungsvorschrift ar bestimmen und auf die Attribute des Pfades zur "Erzeugenden Instanz" 13 Path(Ei(I_{Z})) im Quellbaum 12 sowie die bereits berechneten Attribute im Zielbaum 10 Path(I_{Z}) anwenden
      (weitere, beliebig im Quellbaum 12 gelagerte Attribute können mit Sonderfunktionen gefunden und eingebunden werden)
   II. erzeuge alle Nachfolger 14 von l_{Z} 11, vgl. Figur 15
      bestimme alle möglichen Nachfolgerklassen von I_{Z} 11 mittels Nf(Obj(l_{Z})) für alle n ∈ Nf(Obj(I_{Z})) mittels Gen(n) die Erzeugungsregel er bestimmen und anwenden, falls erfolgreich:
      "Erzeugende Instanz" zuweisen Ei(n) := er( n , Path(Ei(I_{Z}) ∪ Sub(Ei(I_{Z}))) (mit Sonderfunktionen können hier auch "Erzeugende Instanzen" ermittelt werden, die beliebig im Quellbaum gelagert sind)
      n wird "neue Instanz"
      I_{Z} 11 wird "alte Instanz", (Figur 16)
   Der Algorithmus ist abgeschlossen, wenn alle Zielbaumknoten 11, 14 usw. "alte" Knoten sind. D. h. es konnten keine "neuen" Knoten als Nachfolger bereits erzeugter Zielbauminstanzen mehr erzeugt werden und alle Attribute sind berechnet.

Mit dem Aufbau des Zielbaums 10 ist die Hauptarbeit des Konverters 1 abgeschlossen. Der erstellte Zielbaum 10 ist noch in geeigneter Weise dem Backend des Konverters zur Weiterverarbeitung bereitzustellen. In der realisierten Lösung heißt das zur Delta-Bildung mit den Daten des Vortags und zur Übertragung der Differenz an die TMN-Plattform in Form von einzelnen Mitteilungen.

### Zeichnungslegende

- 1: Konverter
- 2: TMN-Plattform
- 3: Management Information Base (MIB)
- 4: OMC-Rechner
- 5: Eingangsdaten
- 6: Datei
- 7: Parser
- 8: Datei
- 9: Delta Generator
- 10: Zielbaum
- 11: Knoten (Zielbaum)
- 12: Quellbaum
- 13: Erzeugende Instanz (Quellbaum)
- 14: Knoten (Zielbaum)
- 15: Knoten (Quellbaum)
- 16: Knoten (Quellbaum)
- 17: Teilbaum (Zielbaum)
- 18: Teilbaum (Quellbaum)
- 19: Wurzel (Quellbaum)
- 20: Containment-Tree
- 21: Objektklasse
- 22: Attribute
- 23: Einstiegspunkt
- 24: Teilbaum
- 25: Ebene
- 26: Wurzel (Zielbaum)

## Patentansprüche

1. Verfahren zur Konvertierung baumstrukturierter Daten, wobei von einer ersten Datenverarbeitungsanlage bereitgestellte Daten (5) in der Form eines Quellbaumes (12) in von einer zweiten Datenverarbeitungsanlage lesbare Daten (8) in der Form eines Zielbaumes (10) durch eine Konvertierungseinrichtung und ein davon unabhängiges Regelsystem konvertiert werden, wobei der Quell- und der Zielbaum (12; 10) aus Objekten einer oder mehrerer Objektklassen (21) bestehen, die jeweils ein oder mehrere Attribute (22) enthalten, und wobei das Regelsystem Umgebungsregeln, Attributsberechnungsregeln und Erzeugungsregeln umfasst,
**gekennzeichnet durch** folgende Schritte
a) Erzeugen der Wurzel R_{Z} (26) des Zielbaumes (10) und Kennzeichnen der Wurzel (19) des Quellbaums (12) als Erzeugende Instanz (13) für die Wurzel (26) des Zielbaums (10);
b) Wurzel (26) des Zielbaums (10) als "neu" markieren;
c) Ermitteln aller Umgebungsregeln zur Suche nach Berechnungsinstanzen des Quellbaums (12), die zur Berechnung der Attribute (22) des neuen Zielbaumknotens (14) benötigt werden;
d) Festlegen der Berechnungsinstanzen **durch** Anwendung der Umgebungsregeln auf die Erzeugende Instanz (13) des Quellbaumknotens (15;16);
e) Ermitteln aller zu dem neu erzeugten Zielbaumknoten (14) gehörenden Attributberechnungsregeln zur Berechnung der Attribute (22) dieses Knotens (14);
f) Ermitteln der Attributwerte des neuen Zielbaumknotens (14) **durch** Anwendung der Attributberechnungsregeln auf die Berechnungsinstanzen und die Erzeugende Instanz (13);
g) Ermitteln aller Erzeugungsregeln zur Erzeugung von Nachfolgern des Zielbaumknotens (14);
h) Erzeugung der Nachfolger **durch** Anwendung der Erzeugungsregeln auf die Erzeugende Instanz (13) des Quellbaumknotens (15;16), dabei kennzeichnen der entsprechenden Quellbaumknoten (15;16) als Erzeugende Instanzen (13) für die Nachfolgerknoten;
i) den neuen Zielbaumknoten (14) als "alt" und alle seine Nachfolger als "neu" markieren;
j) einen neuen Zielbaumknoten (14) auswählen und Wiederholung des Verfahrens ab Schritt c) bis keine neuen Knoten mehr vorhanden.

2. Verfahren nach Anspruch 1, **dadurch gekennzeichnet, daß** die Eingangsdaten (5) von einem Analysealgorithmus (7) vorverarbeitet werden und in einem festen Format in einer Datei (6) bereitgestellt werden.

3. Verfahren nach einem der Ansprüche 1 oder 2, **dadurch gekennzeichnet, daß** die konvertierten Daten in einem festen Format in einer Datei (8) für eine Nachverarbeitung bereitgestellt werden.

4. Verfahren nach einem der Ansprüche 1 bis 3, **dadurch gekennzeichnet, daß** als Wurzel (26) des Zielbaums (10) und als Wurzel (19) des Quellbaums (12) diejenigen Objektklassen (21) ausgezeichnet werden, die in der Klassenhierarchie näher zur Wurzel der Klassenhierarchie liegen, als alle übrigen Objektklassen.

5. Verfahren nach einem der Ansprüche 1 bis 4, **dadurch gekennzeichnet, daß** für die Konstruktion eines neuen Teilbaums (17) unterhalb eines betrachteten Zielbaumknotens (14) nur der Teilbaum der diesem Zielbaumknoten zugeordneten Erzeugenden Instanz (13) betrachtet wird.

6. Verfahren nach einem der Ansprüche 1 bis 5, **dadurch gekennzeichnet, daß** für jede Objektklasse (21) des Zielbaums (10) genau eine Erzeugungsregel definiert ist.

7. Verfahren nach einem der Ansprüche 1 bis 6, **dadurch gekennzeichnet, daß** anhand der Erzeugungsregel der Quellbaum (12) im Umfeld der Erzeugenden Instanz (13) nach Instanzen einer bestimmten Objektklasse (21), die spezielle Bedingungen erfüllen sollen, durchsucht wird, und bei erfolgreicher Suche ein neuer Knoten (14) im Zielbaum (10) angelegt und die Quellbauminstanz zur zugehörigen Erzeugenden Instanz (13) des Zielbaumknotens (14) angelegt wird.

8. Verfahren nach einem der Ansprüche 1 bis 7, **dadurch gekennzeichnet, daß** ein Zielbaumknoten (14) nur angelegt wird, wenn sich mit Hilfe der zugehörigen Erzeugungsregel eine Erzeugende Instanz (13) für ihn im Quellbaum (12) ermitteln läßt.

9. Verfahren nach einem der Ansprüche 1 bis 8, **dadurch gekennzeichnet, daß** die Regeln zur Berechnung der Attribute (22) Funktionen sind, anhand derer aus den Attributen verschiedener Objekte des Quellbaums (12) Attribute des neuen Zielbaumknotens (14) berechnet werden.

10. Verfahren nach einem der Ansprüche 1 bis 9, **dadurch gekennzeichnet, daß** die zulässigen Objektklassen (21), die zulässigen Nachfolger der einzelnen Objektklassen und die zu jeder Objektklasse zugehörigen Attribute (22) in einem Regelwerk bereitgestellt werden.

## Claims

1. Process for converting tree-structured data, wherein data (5) provided by a first data-processing system in the form of a source tree (12) are converted to data (8), which can be read by a second data-processing system, in the form of a target tree (10) by a converting device and a rule system which is independent thereof, wherein the source tree and the target tree (12; 10) consist of objects of one or more object classes (21), which contain in each case one or more attributes (22), and wherein the rule system comprises environment rules, attribute-calculation rules and production rules, **characterised by** the following steps
a) producing the root R_{z}(26) of the target tree (10) and flagging the root (19) of the source tree (12) as producing entity (13) for the root (26) of the target tree (10);
b) mark root (26) of the target tree (10) as "new";
c) determining all environment rules to search for calculation entities of the source tree (12), which are required to calculate the attributes (22) of the new target tree node (14);
d) establishing the calculation entities by applying the environment rules to the producing entity (13) of the source tree node (15; 16);
e) determining all attribute-calculation rules belonging to the newly produced target tree node (14) to calculate the attributes (22) of this node (14);
f) determining the attribute values of the new target tree node (14) by applying the attribute-calculation rules to the calculation entities and the producing entity (13);
g) determining all production rules to produce successors of the target tree node (14);
h) producing the successors by applying the production rules to the producing entity (13) of the source tree node (15; 16), thus flagging the corresponding source tree nodes (15; 16) as producing entities (13) for the successor nodes;
i) mark the new target tree node (14) as "old" and all its successors as "new";
j) select a new target tree node (14) and repeating the process from step c) until no further new nodes exist.

2. Process according to claim 1, **characterised in that** the input data (5) are preprocessed by an analysis algorithm (7) and are provided in a fixed format in a data file (6).

3. Process according to one of claims 1 or 2, **characterised in that** the converted data are provided in a fixed format in a data file (8) for post-processing.

4. Process according to one of claims 1 to 3, **characterised in that** those object classes (21), which in the class hierarchy lie closer to the root of the class hierarchy than all remaining object classes, are labelled as root (26) of the target tree (10) and as root (19) of the source tree (12).

5. Process according to one of claims 1 to 4, **characterised in that** for the construction of a new part tree (17) below a considered target tree node (14), only the part tree of the producing entity (13) assigned to this target tree node is considered.

6. Process according to one of claims 1 to 5, **characterised in that** for each object class (21) of the target tree (10), precisely one production rule is defined.

7. Process according to one of claims 1 to 6, **characterised in that** using the production rules, the source tree (12) is searched through in the associated area of the producing entity (13) for entities of a certain object class (21), which should fulfil special conditions, and in the event of a successful search, a new node (14) is applied in the target tree (10) and the source tree entity is applied to the associated producing entity (13) of the target tree node (14).

8. Process according to one of claims 1 to 7, **characterised in that** a target tree node (14) is only applied when a producing entity (13) for it can be determined in the source tree (12) with the aid of the associated production rules.

9. Process according to one of claims 1 to 8, **characterised in that** the rules for calculating the attributes (22) are functions, using which attributes of the new target tree node (14) are calculated from the attributes of different objects of the source tree (12).

10. Process according to one of claims 1 to 9, **characterised in that** the admissible object classes (21), the admissible successors of the individual object classes and the attributes (22) associated with any object class are provided in a set of rules.

## Revendications

1. Procédé pour convertir des données à structure arborescente, selon lequel des données (5) fournies par un premier système informatique sous la forme d'un arbre source (12) sont converties par un dispositif de conversion et par un système régulateur indépendant de celui-ci en données (8) lisibles par un second système informatique sous la forme d'un arbre cible (10), les arbres source et cible (12 ; 10) se composent d'objets d'une ou plusieurs catégories d'objets (21) qui contiennent chacun un ou plusieurs attributs (22), et le système régulateur comprend des règles d'environnement, des règles de calcul d'attributs et des règles de production,
**caractérisé par** les étapes suivantes, qui consistent à :
a) produire la racine R_{Z} (26) de l'arbre cible (10) et identifier la racine (19) de l'arbre source (12) comme instance productrice (13) pour la racine (26) de l'arbre cible (10) ;
b) repérer la racine (26) de l'arbre cible (10) comme "nouvelle" ;
c) déterminer toutes les règles d'environnement pour la recherche d'instances de calcul de l'arbre source (12) qui sont nécessaires au calcul des attributs (22) du nouveau noeud d'arbre cible (14) ;
d) fixer les instances de calcul en appliquant les règles d'environnement à l'instance productrice (13) du noeud d'arbre source (15 ; 16) ;
e) déterminer toutes les règles de calcul d'attributs qui font partie du noeud d'arbre cible (14) nouvellement produit, pour le calcul des attributs (22) de ce noeud (14) ;
f) déterminer les valeurs d'attribut du nouveau noeud d'arbre cible (14) en appliquant les règles de calcul d'attributs aux instances de calcul et à l'instance productrice (13);
g) déterminer toutes les règles de production pour produire des successeurs du noeud d'arbre cible (14) ;
h) produire les successeurs en appliquant les règles de production à l'instance productrice (13) du noeud d'arbre source (15 ; 16), et identifier les noeuds d'arbre source (15 ; 16) correspondants comme instances productrices (13) pour les noeuds successeurs ;
i) repérer l'ancien noeud d'arbre cible (14) comme "ancien" et tous ses successeurs comme "nouveaux" ;
j) sélectionner un nouveau noeud d'arbre cible (14) et reprendre la procédure à partir de l'étape c) jusqu'à ce qu'il n'y ait plus de noeud nouveau.

2. Procédé selon la revendication 1, **caractérisé en ce que** les données d'entrée (5) sont prétraitées par un algorithme d'analyse (7) et sont fournies dans un format fixe dans un fichier (6).

3. Procédé selon la revendication 1 ou 2, **caractérisé en ce que** les données converties sont fournies dans un format fixe dans un fichier (8) pour un post-traitement.

4. Procédé selon l'une des revendications 1 à 3, **caractérisé en ce qu'**on distingue comme racine (26) de l'arbre cible (10) et comme racine (19) de l'arbre source (12) les catégories d'objets (21) qui, dans la hiérarchie des catégories, se trouvent plus près de la racine de ladite hiérarchie que toutes les autres catégories d'objets.

5. Procédé selon l'une des revendications 1 à 4, **caractérisé en ce que** pour la construction d'un nouveau sous-arbre (17) au-dessous d'un noeud d'arbre cible (14) considéré, on ne considère que le sous-arbre de l'instance productrice (13) associée à ce noeud d'arbre cible.

6. Procédé selon l'une des revendications 1 à 5, **caractérisé en ce que** pour chaque catégorie d'objets (21) de l'arbre cible (10) est définie exactement une règle de production.

7. Procédé selon l'une des revendications 1 à 6, **caractérisé en ce que**, à l'aide de la règle de production, on examine l'arbre source (12) dans la zone de l'instance productrice (13) pour trouver les instances d'une catégorie d'objets (21) définie qui doivent remplir des conditions spéciales, et si la recherche est concluante, un nouveau noeud (14) est créé dans l'arbre cible (10) et l'instance d'arbre source pour l'instance productrice (13) associée du noeud d'arbre cible (14) est créée.

8. Procédé selon l'une des revendications 1 à 7, **caractérisé en ce qu'**un noeud d'arbre cible (14) n'est créé que si une instance productrice (13) peut être déterminée pour lui dans l'arbre source (12) à l'aide de la règle de production associée.

9. Procédé selon l'une des revendications 1 à 8, **caractérisé en ce que** les règles pour le calcul des attributs (22) sont des fonctions à l'aide desquelles des attributs du nouveau noeud d'arbre cible (14) sont calculés à partir des attributs de différents objets de l'arbre source (12).

10. Procédé selon l'une des revendications 1 à 9, **caractérisé en ce que** les catégories d'objets (21) autorisées, les successeurs autorisés des catégories d'objets individuelles et les attributs (22) associés à chaque catégorie d'objets sont fournis dans un ensemble de règles.
